# FASCICULE DE BREVET EUROPEEN

(11) **EP 3 094 538 B1**
(45) Date de publication et mention de la délivrance du brevet: **01.11.2017**
(21) Numéro de dépôt: 15700557.0
(22) Date de dépôt: 13.01.2015
(51) Int. Cl.: B62D 1/22, B62D 1/04

(54) **KART BIPLACE A VOLANT DESACTIVABLE**
ZWEISITZIGER WAGEN MIT AKTIVIERBAREM LENKRAD
TWO-SEATER CART WITH AN ACTIVATABLE STEERING WHEEL

(30) Priorité: 15.01.2014 FR 1450306
(43) Date de publication de la demande: 23.11.2016
(73) Titulaire: SODIKART, 44200 Couëron (FR)
(72) Inventeur: MERIAN, Alain, F-44450 La Chappelle-Basse-Mer (FR)
(74) Mandataire: Vidon Brevets & Stratégie
(86) Numéro de dépôt international: PCT/EP2015/050485
(87) Numéro de publication internationale: WO 2015/107041

(56) Documents cités:
- CA-A- 492 724
- FR-A1- 2 856 371

## Description

### 1. Domaine de l'invention

Le domaine de l'invention est celui des véhicules de loisir utilisés par exemple sur pistes, et plus particulièrement celui des karts.

Les karts sont des véhicules motorisés exploités sur des pistes fermées, par opposition à des véhicules roulant sur route. Ces pistes sont extérieures (« outdoor ») ou couvertes (« indoor »). On peut distinguer deux catégories principales de karts : les karts de location et les karts de loisir-compétition.

Les premiers sont exploités par des professionnels qui les louent à des particuliers (location au ticket), ou à des entreprises dans le cadre de séminaires de motivation du personnel ou autres. Les seconds sont la plupart du temps la propriété de personnes privées, qui les utilisent pour leur loisir, en s'entraînant et en participant à des compétitions.

L'invention s'applique aux karts de location, mais également aux karts de compétition et de loisir, et plus particulièrement aux karts biplaces.

### 2. Art antérieur et ses inconvénients

Les karts biplaces sont des karts dont le châssis est équipé de deux sièges, afin de permettre à deux personnes de prendre place à bord du même kart. De tels karts biplaces sont particulièrement utilisés dans le cadre d'une initiation au karting, lorsqu'un pilote expérimenté propose un baptême de kart à un passager. Un tel passager peut être un enfant, une personne à mobilité réduite, ou un déficient visuel par exemple, qui souhaitent découvrir les sensations du karting, mais ne peuvent prendre seuls les commandes du kart. Il peut également s'agir d'un utilisateur débutant, qui n'a jamais ou rarement piloté, mais souhaite apprendre à conduire un kart.

A ce jour, il existe donc principalement deux types de karts biplaces.

Les karts biplaces utilisés exclusivement à des fins de baptême de kart ne sont généralement équipés que d'un volant, destiné au pilote ; une poignée de maintien peut être prévue pour le passager, qui peut parfois prendre la forme d'un volant fixe. Dans ce cas, un tel volant n'est bien sûr pas relié à la colonne de direction, et n'est pas mobile en rotation : il n'est destiné qu'à permettre au passager d'avoir un point d'appui sur lequel fixer ses mains quand le kart est en mouvement.

Les karts biplaces utilisés à des fins d'apprentissage de la technique de conduite sont généralement équipés de deux volants, qui sont tous deux reliés à la colonne de direction, et permettent toutes deux d'orienter les roues du kart, de manière couplée. On parle alors de volants actifs. Ainsi, le pilote instructeur et l'apprenti pilote peuvent chacun actionner leur volant, de sorte que le pilote instructeur peut notamment rectifier une éventuelle trajectoire erronée de l'apprenti pilote. Le document de brevet FR 2 856 371 présente un tel kart biplace, dans lequel l'une des places est destinée à un novice en apprentissage et l'autre à un instructeur.

Lorsqu'une piste de karts souhaite proposer à ses clients, et des baptêmes de kart, et des cours de conduite, elle doit donc disposer de deux types de karts biplaces distincts. Il pourrait en effet être dangereux de proposer des baptêmes de kart sur des karts présentant deux volants actifs, l'utilisateur néophyte risquant d'opérer des manipulations intempestives du volant pouvant conduire à l'accident. Ceci impose donc à la piste de karts des investissements coûteux.

On pourrait envisager d'intervenir mécaniquement sur un kart biplace doté de deux volants actifs, pour en démonter certains éléments, afin de rendre ponctuellement inactif un volant actif. Cependant, cela nécessiterait l'intervention d'un mécanicien expérimenté, et rendrait peu aisé le changement de destination d'un kart biplace, d'une utilisation pour un baptême où seul un volant est actif, à une utilisation pour un cours de conduite, où les deux volants sont actifs.

En outre, au cours de l'apprentissage de la conduite par un apprenti pilote, les aptitudes à piloter de ce dernier évoluent, de sorte qu'il pourrait être souhaitable, dans certaines situations, de le laisser piloter, et dans d'autres, de ne laisser les commandes qu'au pilote instructeur. Ceci n'est pas possible aujourd'hui de manière simple et rapide.

Il existe donc un besoin d'un kart biplace ne présentant pas ces différents inconvénients de l'art antérieur.

Notamment, il existe un besoin d'un kart biplace qui puisse être utilisé, tant pour des baptêmes de kart, que pour des cours de conduite, et dont la destination puisse être rapidement et aisément modifiée sans intervention mécanique complexe, voire même pendant que le kart est en circulation.

Il existe également un besoin d'un tel kart biplace qui soit très simple d'utilisation et peu coûteux à fabriquer.

### 3. Exposé de l'invention

L'invention répond à ce besoin en proposant un kart biplace comprenant un châssis sur lequel sont montés deux sièges et un ensemble de direction, portant au moins deux volants. Selon l'invention, un tel kart biplace comprend des moyens de désactivation de l'un desdits volants, comprenant un ergot de verrouillage. En outre, le volant est apte à prendre au moins deux états :
- un état inactif dans lequel le volant est solidarisé au châssis ;
- un état actif dans lequel le volant est apte à entraîner une colonne de direction de l'ensemble de direction,
le volant passant de l'état actif à l'état inactif, et inversement, par déplacement de l'ergot de verrouillage..

Ainsi, l'invention repose sur une approche tout à fait nouvelle et inventive des karts biplaces. En effet, l'invention propose un kart biplace équipé de deux sièges, et de deux volants qui peuvent être tous les deux actifs, i.e. reliés à la colonne de direction du kart, lorsqu'on souhaite que les deux utilisateurs du kart puissent tous deux contrôler sa direction. Un tel kart biplace est également équipé de moyens de désactivation de l'un des volants qui permettent de façon simple et rapide de désactiver l'un des volants, de sorte que l'un des utilisateurs ne puisse plus contrôler la direction du kart.

Ainsi, en actionnant les moyens de désactivation de l'un des volants, on peut aisément transformer le kart, pour l'utiliser, soit dans un contexte de baptême de kart dans lequel seul le pilote expérimenté peut contrôler le déplacement des roues, soit dans un contexte d'apprentissage de la conduite, dans lequel l'apprenti pilote et le pilote instructeur peuvent tous deux maîtriser la trajectoire du véhicule.

Les deux sièges, et donc les deux volants, peuvent être situés l'un à côté de l'autre, ou l'un derrière l'autre. Les moyens de désactivation peuvent alors indifféremment être prévus sur le volant de droite et/ou de gauche, de devant et/ou de derrière.

De tels moyens de désactivation permettent de rendre actif ou non l'un des deux volants, de façon très rapide et sans démontage d'éléments, donc sans intervention mécanique complexe.

On notera que par volant, on entend ici, et dans tout ce document, la pièce mécanique actionnée manuellement par le conducteur pour choisir la direction du véhicule : le terme volant couvre donc également les guidons, les gouvernails, etc.

Dans son état inactif, le volant est fixe par rapport au châssis et peut avantageusement servir de poignée de maintien au passager, pour l'aider à se maintenir en position, notamment dans les virages. Dans son état actif, le volant est relié à la colonne de direction, par exemple par l'intermédiaire d'une biellette, de sorte qu'une rotation du volant entraîne une orientation correspondante des roues avant du kart. Plus précisément, dans cet état actif, le volant peut être solidarisé à une pièce d'entraînement de la biellette.

Le volant passe de l'état actif à l'état inactif, et inversement, par déplacement d'un ergot de verrouillage.

Ainsi, le changement d'état du volant se fait de façon très simple et très rapide, sans nécessiter d'outillage complexe ou d'intervention d'un mécanicien, par simple déplacement d'un ergot de verrouillage, qui peut soit venir verrouiller le volant dans son état actif, soit venir verrouiller le volant dans son état inactif. Un tel ergot peut être par exemple mobile en translation ou en rotation.

Selon une autre caractéristique essentielle de l'invention, l'ergot de verrouillage est mobile en translation dans une lumière ménagée dans le volant entre au moins une première position dans laquelle l'ergot de verrouillage se loge dans une encoche du châssis pour bloquer tout mouvement du volant par rapport au châssis, et au moins une deuxième position dans laquelle l'ergot de verrouillage se loge dans une encoche de l'ensemble de direction pour opérer une liaison entre le volant et la colonne de direction.

Ainsi l'ergot se présente sous la forme d'un coulisseau de verrouillage qui, lorsqu'il est en butée à une première extrémité de la lumière ménagée dans le volant, se loge dans une encoche formée dans une pièce du châssis. Tout mouvement du volant par rapport au châssis est alors empêché par le coulisseau de verrouillage qui est bloqué dans l'encoche.

Lorsque le coulisseau de verrouillage est en butée à l'autre extrémité de la lumière ménagée dans le volant, il se loge dans une encoche formée dans une pièce de l'ensemble de direction, telle qu'une platine reliée par une liaison pivot à une biellette de direction. Ainsi, lorsque le volant tourne, son mouvement de rotation entraîne celui de la platine reliée à la biellette de direction.

Selon un autre aspect de l'invention, le châssis et/ou l'ensemble de direction présente(nt) au moins deux parois incurvées de part et d'autre de l'encoche permettant de guider l'ergot de verrouillage vers l'encoche lors d'un changement d'état du volant.

En effet, lorsqu'un utilisateur souhaite changer l'état du volant, il déplace l'ergot de verrouillage dans la lumière prévue à cet effet. Cependant, il est possible que la lumière ménagée dans le volant ne soit alors pas alignée avec l'encoche dans laquelle l'ergot de verrouillage doit venir se loger (par exemple si le volant, dans l'état actif, a été tourné et n'est pas dans sa position de repos correspondant à des roues avant droites, ou si le volant, dans l'état inactif, est dans sa position de repos, solidarisé au châssis mais que les roues avant ne sont pas droites, et que la pièce d'entraînement de la biellette de direction n'est pas dans l'axe du volant). Dans ce cas, l'utilisateur déplace l'ergot de verrouillage pour faire changer le volant d'état ; lorsque le volant et/ou les roues avant tournent, l'ergot de verrouillage vient en appui sur l'une des parois incurvées situées de part et d'autre de l'encoche dans laquelle il doit venir se loger. Il coulisse alors le long de ces parois incurvées qui le guident jusqu'à ce qu'il vienne se loger dans l'encoche, et donc verrouiller le volant dans son nouvel état. Le changement d'état du volant est donc déclenché par l'utilisateur par déplacement de l'ergot de verrouillage mais n'est effectif qu'après rotation des roues et/ou du volant entraînant l'alignement de la lumière et des encoches, et donc le guidage de l'ergot de verrouillage dans l'encoche.

Selon encore un autre aspect, le volant comprend un curseur mobile en rotation présentant un doigt monté sur un ressort, le doigt étant apte à s'engager dans un évidement de l'ergot de verrouillage, de façon qu'une rotation du curseur entraîne le déplacement de l'ergot de verrouillage.

Le déplacement de l'ergot de verrouillage est donc commandé de façon simple par rotation d'un curseur prévu sur le volant.

Selon un autre aspect de l'invention, le curseur présente une fente destinée à recevoir une clé de forme idoine apte à actionner une rotation du curseur.

Ainsi, seul l'utilisateur disposant de la clé adaptée peut faire tourner le curseur. On évite ainsi que le passager du kart puisse activer manuellement son volant, notamment lorsque le kart est en circulation. En revanche, le pilote expérimenté, ou le gérant de la piste de kart, peut faire très simplement passer un volant d'un état inactif à un état actif, ou inversement, par simple tour de clé.

Selon encore un autre aspect, le volant est apte à prendre un troisième état intermédiaire, dans lequel le volant est mobile en rotation par rapport au châssis mais n'est pas apte à entraîner la colonne de direction.

Le volant est alors flottant, ou « fou ». Une telle position peut présenter par exemple un intérêt lorsque le passager du kart est un enfant, à qui l'on peut ainsi permettre de tourner le volant, et donc lui donner l'impression de piloter le kart, sans que cela n'ait une quelconque action sur la colonne de direction, et donc sans danger.

Selon une autre caractéristique de l'invention, le volant est monté sur roulement, par exemple un roulement à billes ou à aiguilles.

Ainsi, le volant est, par construction, flottant, i.e. libre en rotation par rapport au châssis. Il peut donc aisément passer d'un état actif dans lequel il est solidarisé à une pièce d'entraînement des biellettes de direction à un état inactif dans lequel il est solidarisé au châssis, et inversement, sans qu'il soit nécessaire de démonter une pièce de fixation du volant au kart.

Selon un autre mode de réalisation de l'invention, l'ergot de verrouillage est une goupille de verrouillage, le volant présente au moins deux trous aptes à recevoir une goupille de verrouillage, et le volant est dans l'état inactif lorsque la goupille de verrouillage est insérée dans un premier trou du volant et dans un trou en vis-à-vis formé dans le châssis, et le volant est dans l'état actif lorsque la goupille de verrouillage est insérée dans un deuxième trou du volant et dans un trou en vis-à-vis formé dans l'ensemble de direction. Les trous ménagés dans le volant sont des trous traversant. Les trous ménagés dans les pièces du châssis et de l'ensemble de direction peuvent en revanche être des trous traversant, des trous borgnes, ou de simples encoches.

Cet autre mode de réalisation offre une alternative simple au verrouillage du volant dans un état actif ou inactif. Il suffit à l'utilisateur de déplacer la goupille, pour l'insérer dans le trou adéquat.

Selon une caractéristique avantageuse de l'invention, chacun desdits volants est équipé desdits moyens de désactivation.

On peut en effet prévoir que les deux volants puissent être tous deux activés ou désactivés ; ainsi, lorsque les deux volants sont situés côté à côté, ou l'un derrière l'autre, le pilote expérimenté peut choisir de s'asseoir à droite ou à gauche, devant ou derrière, en activant ou désactivant les volants qu'il souhaite.

Selon encore un autre mode de réalisation de l'invention, chacun des volants est relié à une colonne de direction de l'ensemble de direction par une biellette, au moins une des biellettes pouvant être désactivée.

Lorsqu'une biellette est désactivée, le volant auquel elle est associée se trouve donc également désactivé. La biellette peut être par exemple démontée.

### 4. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
- la figure 1 présente une vue en perspective d'un ensemble de direction d'un kart biplace selon un mode de réalisation de l'invention ;
- les figures 2A et 2B présentent plus en détail le mécanisme d'activation/désactivation du volant de gauche de la figure 1, selon une vue en perspective pour la figure 2A, et selon une vue de côté pour la figure 2B ;
- la figure 3 illustre un détail des figures 2A et 2B, lorsque le volant est verrouillé dans l'état inactif ;
- la figure 4 illustre un détail des figures 2A et 2B, lorsque le volant est verrouillé dans l'état actif ;
- la figure 5 illustre le curseur rotatif monté sur le volant et permettant d'actionner simplement le mécanisme de verrouillage/déverrouillage des figures 3 et 4.

### 5. Description détaillée de modes de réalisation de l'invention

Le principe général de l'invention repose sur la présence, sur un volant d'un kart biplace équipé de deux volants, de moyens de désactivation du volant, permettant, par une intervention simple et rapide d'un utilisateur, de faire passer le volant d'un état actif dans lequel il permet de piloter le kart, dans un état inactif dans lequel il est décorrélé de l'ensemble de direction, et inversement. Une telle intervention ne nécessite ni outillage mécanique, ni démontage d'éléments. Le volant est ainsi désactivable, ou débrayable.

On présente désormais, en relation avec les figures, un mode de réalisation particulier de l'invention.

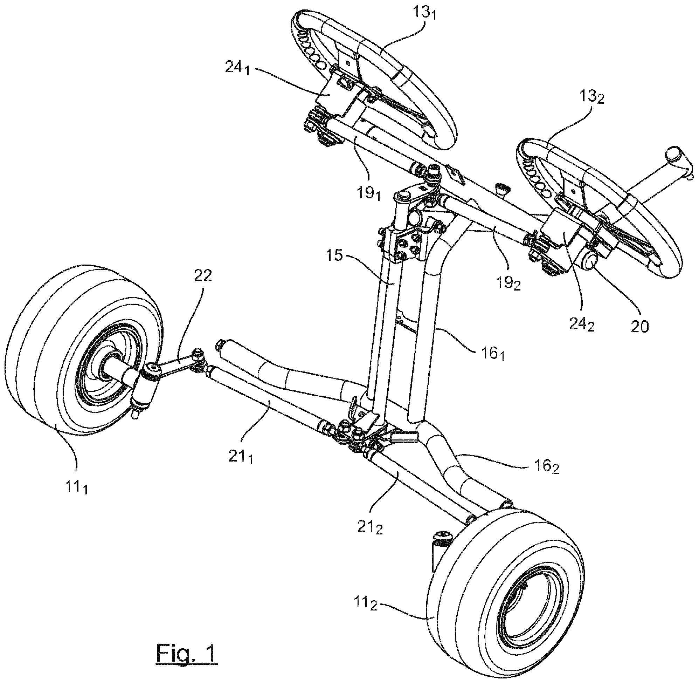

La **figure 1** présente une vue en perspective d'un ensemble de direction selon un mode de réalisation de l'invention, pour un kart biplace.

Un tel kart comprend donc deux volants référencés 13₁ et 13₂, qui sont reliés à la colonne de direction 15 (plus précisément, dans ce mode de réalisation, à la partie supérieure de la colonne de direction) par l'intermédiaire de biellettes référencées 19₁ et 19₂. La partie inférieure de la colonne de direction 15 est quant à elle reliée aux roues 11₁ et 11₂ par l'intermédiaire de biellettes 21₁ et 21₂ et de fusées 22, dont seule une est visible sur la **figure 1****.** Lorsqu'un pilote tourne l'un des volants, le mouvement de rotation du volant est transmis, par l'intermédiaire des biellettes 19, 21 et de la colonne de direction 15, jusqu'aux fusées 22, et entraîne l'orientation correspondante des roues avant 11₁ et 11₂.

Les volants 13₁, 13₂ sont montés sur un moyeu de volant 20, qui fait partie de l'ensemble de direction, et est vissé à la partie supérieure de deux tiges de support de direction 16₁, disposées de part et d'autre de la colonne de direction 15. Le moyeu de volant 20 s'étend sensiblement horizontalement, depuis ces deux tiges de support 16₁, de part et d'autre de ces dernières. Ces deux tiges de support de direction 16₁ s'étendent sensiblement parallèlement à la colonne de direction 15 dans leur partie inférieure, et sont coudées dans leur partie supérieure.

En leur partie inférieure, les tiges de support 16₁ sont reliées par soudure à une pièce tubulaire en forme de V référencée 16₂ qui fait également partie du support de direction 16. Les extrémités de cette pièce 16₂ en forme de V sont sensiblement rectilignes, et reliées au châssis (non représenté).

Lorsque le kart biplace est utilisé pour une démonstration ou un baptême de kart, il n'est pas utile que les deux volants puissent être actionnés, et il est même au contraire souhaitable de pouvoir désactiver l'un des volants, afin d'empêcher que le passager inexpérimenté du kart ne vienne perturber la conduite du pilote, par un mouvement intempestif du volant.

Pour ce faire, selon un premier mode de réalisation particulier de l'invention, il est donc possible de désactiver l'une des deux biellettes, par exemple simplement en la désolidarisant de la colonne de direction 15. Le pilote peut choisir s'il préfère s'asseoir à droite ou à gauche du kart biplace, et l'on désactive alors la biellette 19 située côté passager.

Alternativement, lorsque le kart biplace est utilisé pour la formation d'un pilote, il peut être souhaitable que les deux volants puissent être utilisés, l'un pour l'élève-pilote, qui conduit le kart, et l'autre pour le pilote-instructeur qui souhaiterait rectifier une trajectoire erronée empruntée par l'élève-pilote par exemple.

Dans le mode de réalisation particulier de la figure 1, on a représenté un kart biplace dans lequel les deux utilisateurs du kart s'asseyent côte à côte, et dans lequel les deux volants sont donc placés côte à côte, l'un sur la droite du kart, et l'autre sur la gauche du kart. L'invention s'applique bien sur également à un kart biplace dans lequel les deux utilisateurs prendraient place l'un derrière l'autre à bord du véhicule.

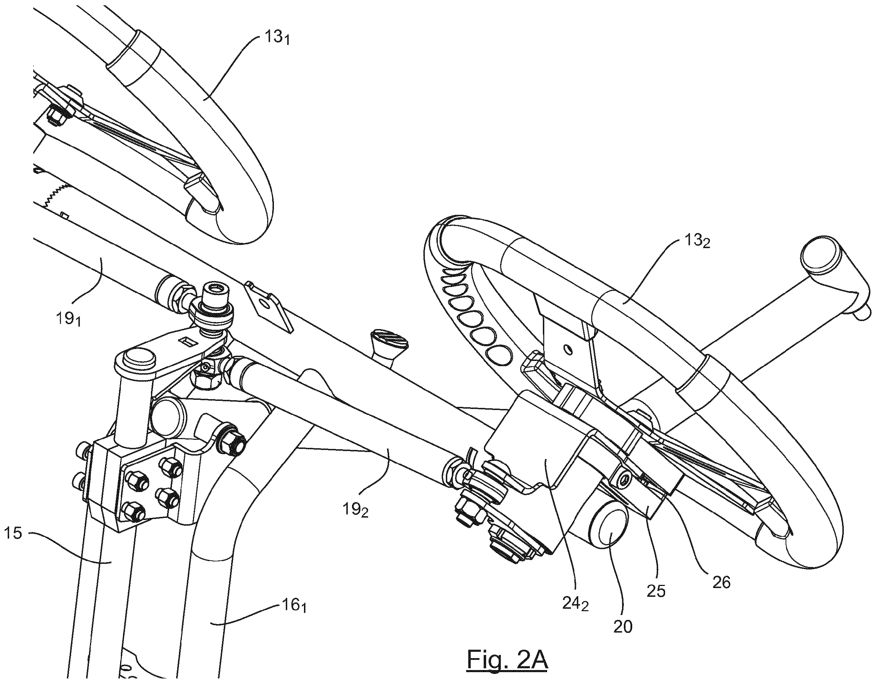

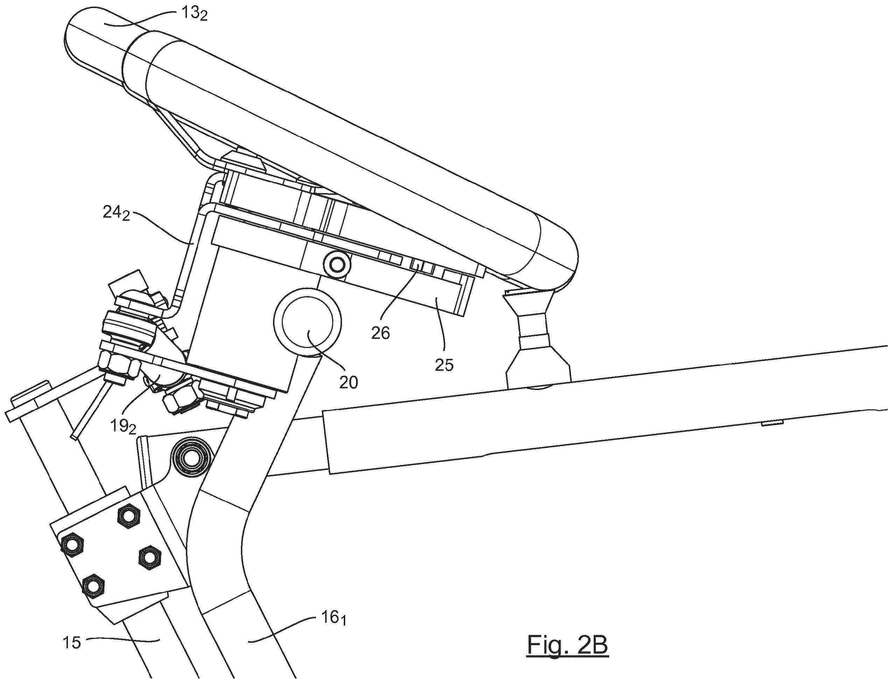

On présente désormais plus en détail, en relation avec les figures 2A et 2B, le volant de gauche du kart de la figure 1, et notamment le mécanisme permettant de le faire changer d'état dans un deuxième mode de réalisation particulier de l'invention. On notera que, dans l'exemple de la figure 1, seul le volant de gauche est équipé d'un tel mécanisme d'activation/désactivation du volant. On pourrait bien sûr également prévoir que ce mécanisme soit situé sur le volant de droite, ou sur les deux volants.

Le volant 13₂ est monté sur roulement, par exemple à billes (non visible sur les figures), de sorte qu'il est par défaut flottant, ou « fou », i.e. libre en rotation par rapport au châssis et à l'ensemble de direction.

Sur les **figures 2A-2B****,** le volant de droite 13₁, les biellettes référencées 19₁ et 19₂, la colonne de direction 15, les pièces de liaison mécanique entre les biellettes et la colonne de direction, la platine 24₂ d'entraînement de la biellette 19₂ sont les pièces articulées communes à la direction conventionnelle du kart (ensemble de direction). A l'inverse, les tiges de support de direction 16₁, le moyeu de volant 20, la plaque de support du volant référencée 25 sont les pièces statiques liées au châssis.

Le volant 13₂ comprend des moyens de désactivation comprenant un ergot de verrouillage référencé 26 qui, sur les **figures 2A** **et** **2B****,** est présenté dans une position intermédiaire : le volant 13₂ est alors dans un état intermédiaire, dans lequel il est flottant, grâce à son montage sur roulement à billes.

Cet ergot de verrouillage référencé 26 est apte à coulisser dans une lumière ménagée dans le volant 13₂ entre deux positions extrêmes :
- une position dans laquelle l'ergot de verrouillage 26 s'engage dans une encoche ménagée dans la platine 24₂ d'entraînement de la biellette de direction 19₂: dans cette position, l'ergot de verrouillage 26 solidarise les mouvements de rotation du volant 13₂ et de la platine 24₂, de sorte que le volant est dans un état actif ;
- une position dans laquelle l'ergot de verrouillage 26 s'engage dans une encoche ménagée dans la plaque 25 de support du volant : dans cette position, l'ergot de verrouillage 26 solidarise le volant 13₂ au châssis, de sorte que le volant est dans un état inactif.

Lorsque l'ergot de verrouillage 26 se situe dans la partie médiane de la lumière, le volant n'est solidarisé, ni à l'ensemble de direction, ni au châssis, et est donc dans un état intermédiaire dans lequel il est flottant.

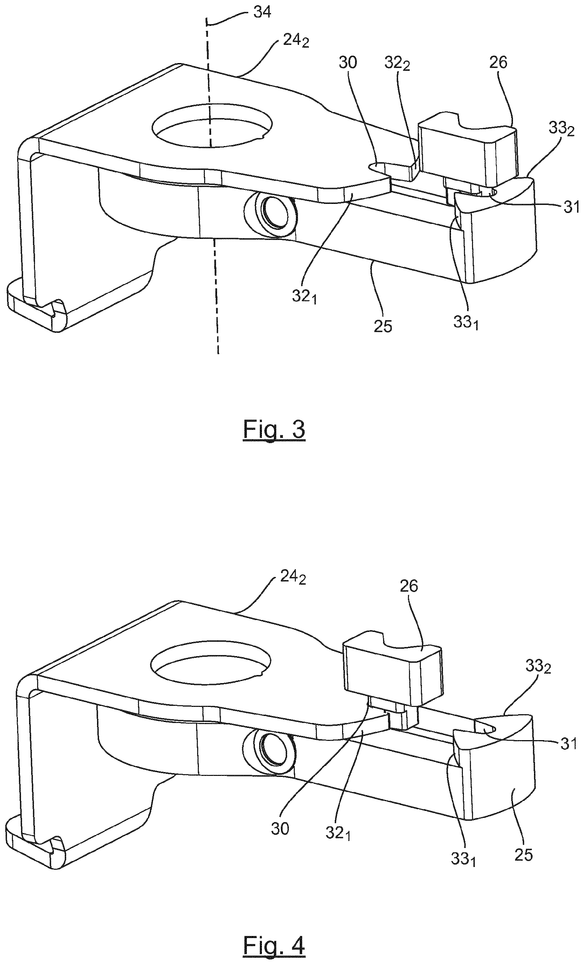

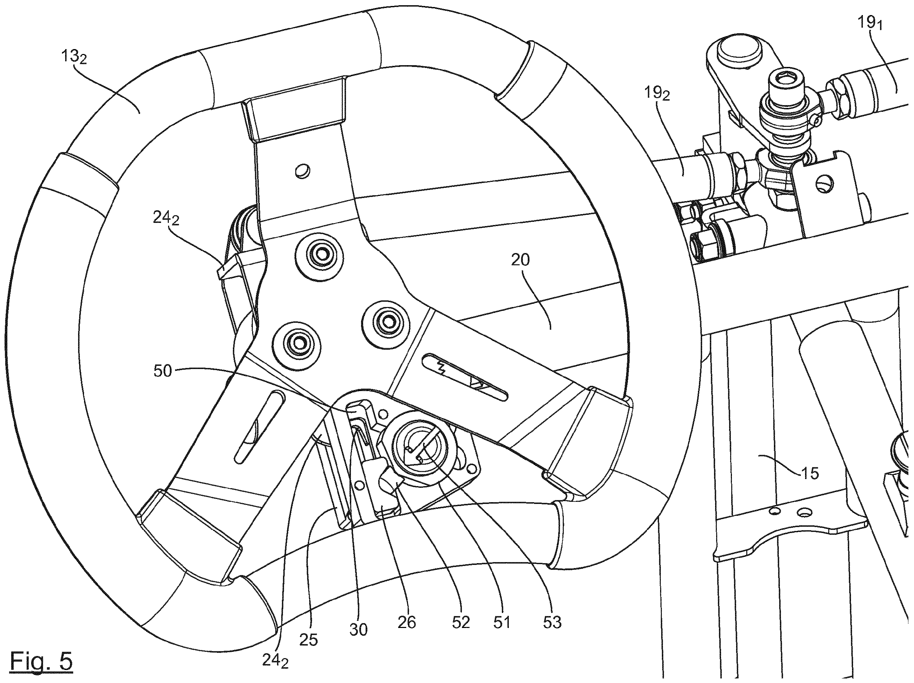

Les **figures 3 et 4** illustrent plus en détail le mécanisme de verrouillage du volant 13₂ dans un état actif ou inactif au moyen de l'ergot de verrouillage 26. Comme indiqué ci-dessus, cet ergot de verrouillage 26 coulisse dans une lumière ménagée dans le volant 13₂, qui n'est pas illustrée sur les **figures 3 et 4****,** mais que l'on observe sur la **figure 5****,** commentée ci-après (voir référence 50).

Dans l'exemple de la **figure 3****,** l'ergot de verrouillage 26 est en butée à une première extrémité de la lumière, et s'engage dans une encoche référencée 31 ménagée dans la plaque 25 de support de volant, fixée au châssis. Le volant 13₂ n'est donc pas libre en rotation par rapport au châssis : il est dans un état dit inactif, dans lequel il sert de poignée de maintien au passager du kart.

Dans l'exemple de la **figure 4****,** l'ergot de verrouillage 26 est en butée à l'autre extrémité de la lumière ménagée dans le volant 13₂, et s'engage dans une encoche référencée 30 ménagée dans la platine d'entraînement 24₂ de la biellette de direction 19₂. La rotation du volant 13₂ entraîne donc le déplacement de la biellette 19₂, par l'intermédiaire de la platine d'entraînement 24₂: le volant 13₂ est dans un état dit actif, dans lequel il est solidarisé à l'ensemble de direction du kart, pour autoriser la direction.

On observe sur les **figures 3 et 4** que la platine d'entraînement 24₂ présente, de part et d'autre de l'encoche référencée 30, des parois incurvées référencées 32₁ et 32₂. Ainsi, lorsque le volant 13₂ est verrouillé dans l'état inactif **(****figure 3****),** et qu'un utilisateur du kart fait coulisser l'ergot de verrouillage 26 dans la lumière ménagée dans le volant pour faire passer le volant dans un état actif, cet ergot de verrouillage 26 peut ne pas s'engager immédiatement dans l'encoche référencée 30, si cette encoche 30 n'est momentanément pas alignée avec la lumière. C'est le cas notamment si les roues avant du kart ne sont pas droites, et que la platine d'entraînement 24₂ a donc tourné autour de l'axe 34 par rapport à la position de repos des **figures 3 et 4****.**

Lorsque l'utilisateur fait coulisser l'ergot de verrouillage 26, il vient donc tout d'abord en butée sur les parois incurvées 32₁ ou 32₂ (selon la position des roues avant) ; lorsque les roues avant se redressent pour revenir dans l'axe principal du kart, l'ergot de verrouillage est guidé le long des parois incurvées 32₁ ou 32₂ jusqu'à ce qu'il vienne se loger dans l'encoche 30 lorsque celle-ci s'aligne avec la lumière ménagée dans le volant 13₂.

De même, des parois incurvées 33₁ et 33₂ sont prévues sur la plaque 25 de support du volant de part et d'autre de l'encoche référencée 31. Elles ont également pour fonction de guider l'ergot de verrouillage 26 jusqu'à ce qu'il vienne se loger dans l'encoche 31, dans le cas où un utilisateur fait coulisser l'ergot de verrouillage 26 de l'encoche référencée 30 vers l'encoche référencée 31 pour verrouiller le volant dans un état inactif, alors que le volant est tourné par rapport à sa position de repos (correspondant à des roues avant droites) et que la lumière dans laquelle coulisse l'ergot de verrouillage 26 n'est donc pas alignée axialement avec l'encoche 31.

La **figure 5** illustre plus en détail le mécanisme permettant à l'utilisateur d'actionner simplement le déplacement de l'ergot de verrouillage 26 entre les deux positions des **figures 3 et 4****.**

Comme exposé ci-avant, l'ergot de verrouillage 26 coulisse dans une lumière ménagée dans le volant 13₂ et référencée 50 sur la **figure 5****.** Sur cette figure, l'ergot de verrouillage 26 verrouille le volant 13₂ dans l'état inactif, dans lequel il est solidarisé aux pièces du châssis, et notamment à la plaque 25 de support de volant.

Le volant 13₂ présente par ailleurs un curseur rotatif 51 présentant un doigt 52 monté sur ressort. Ce doigt 52 coopère avec un évidement correspondant de l'ergot de verrouillage 26, de sorte que la rotation horaire du curseur rotatif 51 entraîne le coulissement de l'ergot de verrouillage 26 de l'encoche 31 ménagée dans la plaque 25 de support de volant vers l'encoche 30 ménagée dans la platine 24₂ d'entraînement de la biellette de direction 19₂. Inversement, la rotation antihoraire du curseur rotatif 51 entraîne le coulissement de l'ergot de verrouillage 26 de l'encoche 30 ménagée dans la platine 24₂ d'entraînement de la biellette de direction 19₂ vers l'encoche 31 ménagée dans la plaque 25 de support de volant.

Ainsi, une simple rotation manuelle du curseur rotatif 51 permet d'embrayer ou de débrayer le volant 13₂, selon l'usage que l'on souhaite faire du kart biplace. Cette opération est très simple, ne nécessite aucun outillage, ni aucune intervention de démontage de pièces mécaniques du kart. Elle peut même se faire lorsque le kart est en mouvement (par exemple, si le pilote instructeur veut momentanément rendre le volant de l'apprenti pilote inactif, pour lui faire la démonstration d'une manoeuvre particulièrement délicate).

En variante, on peut prévoir que cette activation/désactivation du volant nécessite de disposer d'une clé spécifique, afin d'éviter que le passager du kart ne puisse activer son volant de manière intempestive, sans le contrôle du pilote, ou du gérant de la piste de karts. Pour ce faire, une fente 53 est ménagée dans le curseur rotatif 51 : la rotation du curseur 51 n'est possible que par introduction dans la fente 53 d'une clé de forme correspondante à celle de la fente. En tournant la clé, on fait tourner le doigt 52 qui entraîne en translation l'ergot de verrouillage 26 dans la lumière 50.

Dans un autre mode de réalisation de l'invention, on peut substituer au mécanisme décrit ci-avant reposant sur la translation d'un ergot de verrouillage, un mécanisme à base de goupille. Dans ce cas, on ménage dans le volant 13₂ deux trous situés respectivement en vis-à-vis des encoches référencées 30 et 31.

Lorsqu'on souhaite verrouiller le volant dans l'état inactif, on insère la goupille dans le trou du volant situé en regard de l'encoche référencée 31 ménagée dans la plaque 25 de support de volant. Ainsi, la goupille solidarise le volant 13₂ à la plaque 25, et donc au châssis.

Lorsqu'on souhaite verrouiller le volant dans l'état actif, pour autoriser la direction, on insère la goupille dans le trou du volant 13₂ situé en regard de l'encoche référencée 30 ménagée dans la platine 24₂ d'entraînement de la biellette de direction 19₂. Ainsi, la goupille solidarise les mouvements du volant 13₂ et de la platine d'entraînement 24₂.

## Revendications

1. Kart biplace comprenant un châssis (10) sur lequel sont montés deux sièges et un ensemble de direction (15, 16), portant au moins deux volants (13₁, 13₂), le kart biplace comprenant des moyens de désactivation de l'un desdits volants, comprenant un ergot de verrouillage (26), ledit volant étant apte à prendre au moins deux états :
- un état inactif dans lequel ledit volant est solidarisé audit châssis ;
- un état actif dans lequel ledit volant est apte à entraîner une colonne de direction dudit ensemble de direction, et
ledit volant passant dudit état actif audit état inactif, et inversement, par déplacement dudit ergot de verrouillage; **caractérisé en ce que** ledit ergot de verrouillage (26) est mobile en translation dans une lumière (50) ménagée dans ledit volant entre au moins une première position dans laquelle ledit ergot de verrouillage (26) se loge dans une encoche (31) dudit châssis pour bloquer tout mouvement dudit volant (13₂) par rapport audit châssis, et au moins une deuxième position dans laquelle ledit ergot de verrouillage (26) se loge dans une encoche (30) dudit ensemble de direction pour opérer une liaison entre ledit volant (13₂) et ladite colonne de direction.

2. Kart biplace selon la revendication 1, **caractérisé en ce que** ledit châssis et/ou ledit ensemble de direction présente(nt) au moins deux parois incurvées (32₁, 32₂, 33₁, 33₂) de part et d'autre de ladite encoche (30, 31) permettant de guider ledit ergot de verrouillage (26) vers ladite encoche lors d'un changement d'état dudit volant.

3. Kart biplace selon l'une quelconque des revendications 1 ou 2, **caractérisé en ce que** ledit volant (13₂) comprend un curseur (51) mobile en rotation présentant un doigt (52) monté sur un ressort, ledit doigt (52) étant apte à s'engager dans un évidement dudit ergot de verrouillage, de façon qu'une rotation dudit curseur entraîne le déplacement dudit ergot de verrouillage.

4. Kart biplace selon la revendication 3, **caractérisé en ce que** ledit curseur (51) présente une fente (53) destinée à recevoir une clé de forme idoine apte à actionner une rotation dudit curseur.

5. Kart biplace selon l'une quelconque des revendications 1 à 4, **caractérisé en ce que** ledit volant (13₂) est apte à prendre un troisième état intermédiaire, dans lequel ledit volant est mobile en rotation par rapport audit châssis mais n'est pas apte à entraîner ladite colonne de direction.

6. Kart biplace selon l'une quelconque des revendications 1 à 5, **caractérisé en ce que** ledit volant (13₁, 13₂) est monté sur roulement.

7. Kart biplace selon la revendication 1, **caractérisé en ce que** ledit ergot de verrouillage (26) est une goupille de verrouillage, **en ce que** ledit volant présente au moins deux trous aptes à recevoir ladite goupille de verrouillage, et **en ce que** ledit volant est dans ledit état inactif lorsque ladite goupille de verrouillage est insérée dans un premier trou dudit volant et dans un trou en vis-à-vis formé dans ledit châssis (25), et **en ce que** ledit volant est dans ledit état actif lorsque ladite goupille de verrouillage est insérée dans un deuxième trou dudit volant et dans un trou en vis-à-vis formé dans ledit ensemble de direction (24₂).

8. Kart biplace selon l'une quelconque des revendications 1 à 7, **caractérisé en ce que** chacun desdits volants (13₁, 13₂) est équipé desdits moyens de désactivation.

9. Kart biplace selon la revendication 1, **caractérisé en ce que** chacun desdits volants (13₁, 13₂) est relié à une colonne de direction (15) dudit ensemble de direction par une biellette (19₁, 19₂), au moins une desdites biellettes pouvant être désactivée.

## Patentansprüche

1. Zweisitziger Gokart, umfassend ein Fahrgestell (10), auf dem zwei Sitze und eine Lenkanordnung (15, 16), die mindestens zwei Lenkräder (13₁, 13₂) trägt, befestigt sind, wobei der zweisitzige Gokart Mittel zum Deaktivieren von einem der Lenkräder, umfassend einen Verriegelungsstift (26), umfasst, wobei das Lenkrad geeignet ist, mindestens zwei Zustände einzunehmen:
- einen inaktiven Zustand, in dem das Lenkrad mit dem Fahrgestell fest verbunden ist;
- einen aktiven Zustand, in dem das Lenkrad geeignet ist, eine Lenksäule der Lenkanordnung anzutreiben,
und wobei das Lenkrad durch Verschieben des Verriegelungsstiftes von dem aktiven Zustand in den inaktiven Zustand und umgekehrt übergeht;
**dadurch gekennzeichnet, dass** der Verriegelungsstift (26) in einem Schlitzloch (50), das in dem Lenkrad ausgebildet ist, zwischen mindestens einer ersten Position, in der der Verriegelungsstift (26) in einer Kerbe (31) des Fahrgestells aufgenommen ist, um jede Bewegung des Lenkrads (13₂) in Bezug auf das Fahrgestell zu blockieren, und mindestens einer zweiten Position, in der der Verriegelungsstift (26) in einer Kerbe (30) der Lenkanordnung aufgenommen ist, um eine Verbindung zwischen dem Lenkrad (13₂) und der Lenksäule zu erstellen, translatorisch beweglich ist.

2. Zweisitziger Gokart nach Anspruch 1, **dadurch gekennzeichnet, dass** das Fahrgestell und/oder die Lenkanordnung mindestens zwei gekrümmte Wände (32₁, 32₂, 33₁, 33₂) auf beiden Seiten der Kerbe (30, 31) aufweist, die ermöglichen, den Verriegelungsstift (26) bei einem Ändern des Zustands des Lenkrads in Richtung der Kerbe zu führen.

3. Zweisitziger Gokart nach einem der Ansprüche 1 oder 2, **dadurch gekennzeichnet, dass** das Lenkrad (13₂) einen drehbeweglichen Schieber (51) aufweist, der einen Finger (52) aufweist, der auf einer Feder befestigt ist, wobei der Finger (52) geeignet ist, in eine Ausnehmung des Verriegelungsstiftes derart einzugreifen, dass eine Drehung des Schiebers das Verschieben des Verriegelungsstiftes bewirkt.

4. Zweisitziger Gokart nach Anspruch 3, **dadurch gekennzeichnet, dass** der Schieber (51) einen Schlitz (53) aufweist, der dazu bestimmt ist, einen Schlüssel von passender Form aufzunehmen, der geeignet ist, eine Drehung des Schiebers zu bewirken.

5. Zweisitziger Gokart nach einem der Ansprüche 1 bis 4, **dadurch gekennzeichnet, dass** das Lenkrad (13₂) geeignet ist, einen dritten Zwischenzustand einzunehmen, in dem das Lenkrad in Bezug auf das Fahrgestell drehbeweglich ist, aber nicht geeignet ist, die Lenksäule zu betätigen.

6. Zweisitziger Gokart nach einem der Ansprüche 1 bis 5, **dadurch gekennzeichnet, dass** das Lenkrad (13₁, 13₂) auf Lagern befestigt ist.

7. Zweisitziger Gokart nach Anspruch 1, **dadurch gekennzeichnet, dass** der Verriegelungsstift (26) ein Sperrstift ist, dass das Lenkrad mindestens zwei Löcher aufweist, die geeignet sind, den Sperrstift aufzunehmen, und dass sich das Lenkrad in dem inaktiven Zustand befindet, wenn der Sperrstift in einem ersten Loch des Lenkrads und in einem gegenüberliegenden Loch, das in dem Fahrgestell (25) gebildet ist, eingefügt ist, und dass sich das Lenkrad in dem aktiven Zustand befindet, wenn der Sperrstift in einem zweiten Loch des Lenkrads und in dem gegenüberliegenden Loch, das in der Lenkanordnung (24₂) gebildet ist, eingefügt ist.

8. Zweisitziger Gokart nach einem der Ansprüche 1 bis 7, **dadurch gekennzeichnet, dass** jedes der Lenkräder (13₁, 13₂) mit Mitteln zum Deaktivieren ausgestattet ist.

9. Zweisitziger Gokart nach Anspruch 1, **dadurch gekennzeichnet, dass** jedes der Lenkräder (13₁, 13₂) mit einer Lenksäule (15) der Lenkanordnung durch eine Schubstange (19₁, 19₂) verbunden ist, wobei mindestens eine der Schubstangen deaktiviert werden kann.

## Claims

1. Two-seater go-kart comprising a chassis (10) on which are mounted two seats and a steering assembly (15, 16), bearing at least two steering wheels (13₁, 13₂), the two-seater go-kart comprising means of deactivating one of the said steering wheels, comprising a locking nose (26), the said steering wheel being suitable for going into at least two states:
- an inactive state in which the said steering wheel is secured to the said chassis;
- an active state in which the said steering wheel is suitable for transmitting motion to a steering column of the said steering assembly and the said steering wheel passing from the said active state to the said inactive state and vice versa by movement of the said locking nose,
**characterised in that** the said locking nose (26) is movable in translational motion in a slot (50) formed in the said steering wheel between at least a first position in which the said locking nose (26) is accommodated in a notch (31) of the said chassis to prevent any movement of the said steering wheel (13₂) relative to the said chassis and at least a second position in which the said locking nose (26) is accommodated in a notch (30) of the said steering assembly to effect a link between the said steering wheel (13₂) and the said steering column.

2. Two-seater go-kart according to claim 1, **characterised in that** the said chassis and/or the said steering assembly have at least two curved walls (32₁, 32₂, 33₁, 33₂) on both sides of the said notch (30, 31) wherein the said locking nose (26) can be guided to the said notch during a change of state of the said steering wheel.

3. Two-seater go-kart according to any one of claims 1 or 2, **characterised in that** the said steering wheel (13₂) comprises a rotatably movable cursor (51) having a spring-mounted finger (52), the said finger (52) being suitable for engaging in a recess of the said locking nose so that rotation of the said cursor brings about the movement of the said locking nose.

4. Two-seater go-kart according to claim 3, **characterised in that** the said cursor (51) has a slot (53) intended to accept an appropriately-shaped key suitable for effecting rotation of the said cursor.

5. Two-seater go-kart according to any one of claims 1 to 4, **characterised in that** the said steering wheel (13₂) is suitable for going into a third intermediate state, wherein the said steering wheel is rotatably movable relative to the said chassis but is not suitable for transmitting motion to the said steering column.

6. Two-seater go-kart according to any one of claims 1 to 5, **characterised in that** the said steering wheel (13₁, 13₂) is mounted on a rolling bearing.

7. Two-seater go-kart according to claim 1, **characterised in that** the said locking nose (26) is a locking pin, **in that** the said steering wheel has at least two holes suitable for accepting the said locking pin and **in that** the said steering wheel is in the said inactive state when the said locking pin is inserted in a first hole of the said steering wheel and in a hole opposite, formed in the said chassis (25) and **in that** the said steering wheel is in the said active state when the said locking pin is inserted in a second hole of the said steering wheel and in a hole opposite, formed in the said steering assembly (24₂).

8. Two-seater go-kart according to any one of claims 1 to 7, **characterised in that** each of the said steering wheels (13₁, 13₂) is fitted with the said deactivation means.

9. Two-seater go-kart according to claim 1, **characterised in that** each of the said steering wheels (13₁, 13₂) is connected to a steering column (15) of the said steering assembly by a connecting rod (19₁, 19₂), at least one of the said connecting rods being capable of being deactivated.
